Europäisches Patentamt

(19) European Patent Office

Office européen des brevets

(11) Publication number: **0 283 103**
**B1**

# EUROPEAN PATENT SPECIFICATION

(45) Date of publication of the patent specification:
**05.12.90**

(51) Int. Cl.⁵: **A47B 9/04**, H02K 7/06

(21) Application number: **88200520.0**

(22) Date of filing: **18.03.88**

(54) Table-leg for a table having a tabletop being adjustable in height, and such a table.

(30) Priority: **20.03.87 NL 8700662**

(43) Date of publication of application:
**21.09.88 Bulletin 88/38**

(45) Publication of the grant of the patent:
**05.12.90 Bulletin 90/49**

(84) Designated Contracting States:
**AT BE CH DE ES FR GB GR IT LI NL SE**

(56) References cited:
**DE-A- 3 049 357**
**FR-A- 2 504 789**
**US-A- 2 857 226**

(73) Proprietor: **TECHNISCH HANDELS- EN ADVIESBUREAU VAN ENGELAND B.V., Bedrijvenpark N.W.-Twente 4, NL-7611 KA Aadorp(NL)**

(72) Inventor: **Van Engeland, Willi, Menkemaborg 17, NL-7608 GA Almelo(NL)**

(74) Representative: **Prins, Hendrik Willem et al, Octrooibureau Arnold & Siedsma Sweelinckplein, 1, NL-2517 GK The Hague(NL)**

## Description

The invention relates to table leg for a table provided with a table top adjustable in height, comprising two mutually telescopically slidable leg parts, an upper leg part which is provided with means for fastening to the table top, a lower leg part which is provided with a spindle nut in which is screwed a screw spindle mounted on the upper leg part, and an electric motor incorporated in the table leg for driving the screw spindle, whereby said electric motor is connected to the lower free end of said screw spindle.

Such a table leg is known from e.g. US-A 2 857 226.

According to this prior art specification the electric motor is accommodated in a hollow lower part of the outer leg and a hollow foot portion connected therewith. This construction has several disadvantages. Firstly, the load of the table is transmitted to the lower leg part via the electric motor and the screw spindle, an arrangement which necessitates an adequately strong mounting of the motor. Secondly, according to this prior art construction it is not possible to drive screw spindles of other extensible table legs while using only one electric motor by means of connection rods or the like mounted in the top of the upper leg part.

The invention has for its object to provide a table leg which has not the disadvantages inherent to the prior art.

Thereto the table leg according to the invention is characterized in that said electric motor is suspended freely on said screw spindle in said lower leg part, and that said electric motor and said lower leg part are provided with co-operating restraining means which prevent said electric motor, movable up and down in the lower leg part, from rotating with respect to said lower leg part.

In this way, the electric motor moves up and down in the lower leg part whilst suspended on the screw spindle, and the load of the table is transmitted to the lower leg part through the screw spindle and spindle nut. Moreover, the electrical connecting leads for the electric motor can easily be brought up from the floor.

In preference, the restaining means comprise at least one longitudinal groove arranged in the inner leg part and an electric motor support sliding in this groove.

In a simple manner, the maximum and minimum extensions of the table leg may be adjusted by use of a first and a second switching means that switches the electric motor off when the table leg reaches its respective maximum or minimum extension. It is advantageous if the first and second switching means are arranged respectively on the top and bottom surfaces of the spindle nut.

With a single electric motor equipped table leg according to the invention, a number of other telescopically extensible legs can be adjusted in length, if, by preference, the screw spindle in the upper leg part is furthermore coupled with coupling means for coupling to a non-driven screw spindle of another table leg adjustable height.

The invention relates further to a table of adjustable height that is provided with at least one table leg according to the invention.

Further preferred embodiments of the invention are defined in the remaining dependent claims 5 and 8.

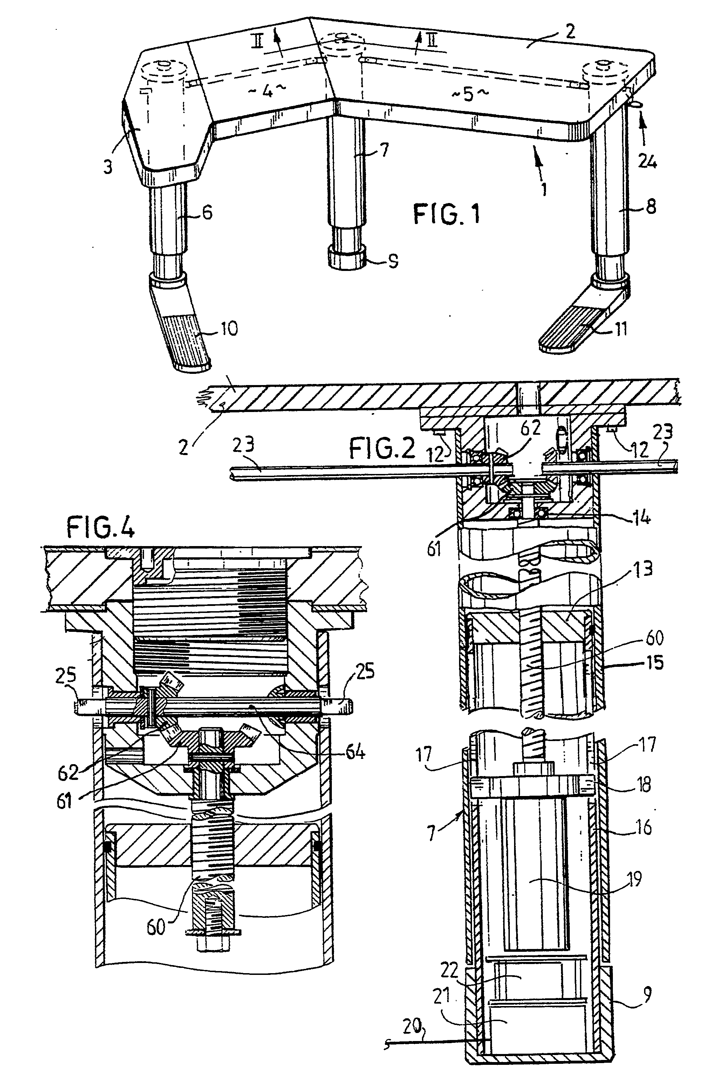

The table 1 shown in figure 1 is known from Dutch patent application No. 84.03471, whose contents should be regarded as interpolated here. The table 1 is provided with a work surface 2, constructed of work surface parts 3, 4 and 5, which are carried by table legs 6 and 8 respectively. Table legs 6 and 8 are provided with supporting feet 10 and 11 respectively, while table leg 7 is provided with a distance foot 9. Work surface 2 is adjustable in height, through table legs 6, 7 and 8 comprising an upper leg part 15 and a lower leg part 16 telescopically slidable in respect thereof.

The table leg 7 (figure 2) comprises two mutually telescopically slidable leg parts 15 and 16, an upper leg part 15 that is provided with screws 12 for fastening to the table top 2, a lower leg part 16 in which is fastened a spindle nut 13, into which is screwed a screw spindle 60 which is mounted at its top and in bearings 14 and is connected at its bottom free end to, suspended freely thereon in the lower leg part, an electric motor 19, which is slidably guided by supports 18 comprising restraining means in longitudinal grooves 17 arranged in the inner, lower leg part 16. The electric motor 19 is connected by means of a lead 20 to a foot or hand-operated switch and is provided with a voltage supply through a transformer 21 and a protection circuit 22. On empowerment the electric motor 19 drives screw spindle 60, which drives, via a transmission gear consisting of bevel gear wheels 61 and 62, a connecting shaft 23, which in turn drives, through a similar transmission gear, the screw spindles of table legs 6 and 8 in the same direction.

The connecting shaft 23 may further be coupled to a crank handle 24 (figure 1) so that hand operation is possible when electric motor 19 has become inoperative or must be disconnected. Usually, the crank handle 24 will no longer be present.

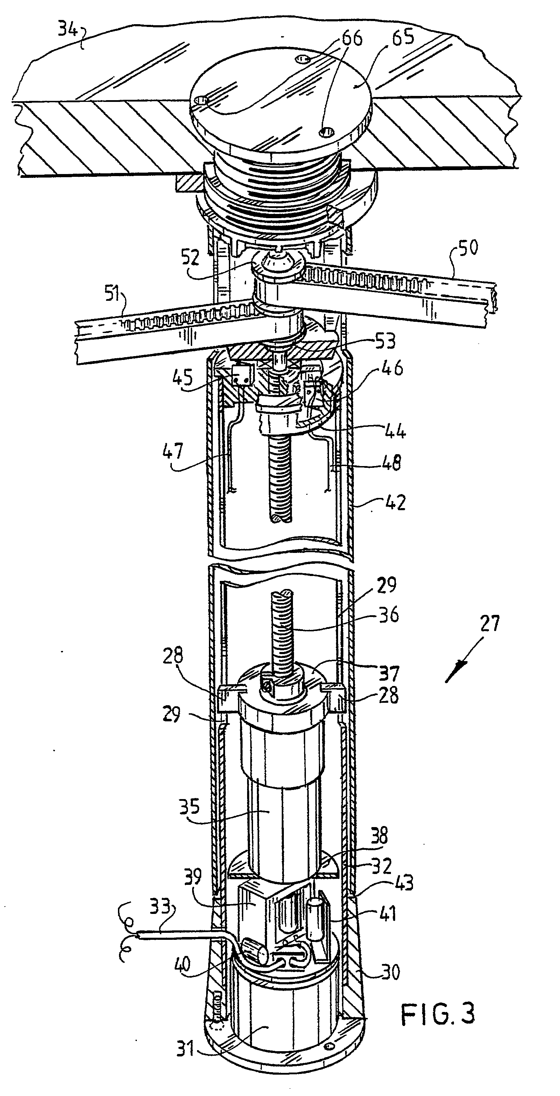

In another embodiment of the table leg according to the invention (figure 3), in a conically formed leg support 30 is held a lower leg part 32, in which a ring core transformer 31 is arranged. A supply voltage is fed through a connection 33, through which control signals can also be passed to an electric motor 35 from a foot switch (not shown) on the floor or hand switch on the work surface 34. Between electric motor 35, which is suspended freely on the screw spindle 36, and screw spindle 36 is arranged, on account of the high revolution speed of electric motor 35, a gear box 37 for transmitting the correct force-motion ratio from the electric motor 35, which is for instance a 24V DC motor. Further incorporated between the DC motor 35 and transformer 31 and beneath a partition 38 - provided with an opening (not shown) for passage of an electrical supply voltage lead (not shown) to electric motor 35 - are a relay 39, a fuse 40 and a bridge rectifier 41. The electric motor 35 and the gearbox 37 are slidably guided via supports 28 of the electric motor in longitudinal grooves 29 in the lower leg part 32, so that upon the turning of the spindle 36 the upper leg part 42, which is cylindrically and telescopically slidable with respect to lower leg part 32, is raised from stop member 43 upwards.

Arranged on the spindle nut 44 at the upper end of spindle 36 are two microswitches 45 and 46, which are connected, as indicated schematically by leads 47 and 48 respectively, to the controller of electric motor 35. In the lowest position of the table leg shown in figure 3 microswitch 45 switches off electric motor 35, whilst in the fully-extended position of the table leg 27 the top surface 48 of the casing 37 will strike against microswitch 46, whereupon electric motor 35 will likewise be switched off. The transmission of the motion of spindle 36 to other table legs takes place through drive belts 50 and 51, which are coupled by means of the respective pulleys 52 and 53 to spindle 36.

The table leg 27 is fastened to work top 34 with the aid of a leaf bolt 65. As a result of countersinking into the wood of the work top, a tight-fitting connection with the leaf bolt 65 is obtained.

This sturdy connection between table leg 27 and work top 34 is advantageous on account of the forces delivered by the electric motor.

The leaf bolt 65 is provided with apertures 66 so that it can be released with a simple spanner.

If the leaf bolt 65 takes a symmetrical form, work top 34 can be reversed in simple manner, so that, for example, the table of figure 1 can easily be embodied in a mirror-image form, which may proved useful for deployment in specific areas.

The connection with use of a leaf bolt can of course also be applied with advantage in the embodiment shown in figure 2.

In the embodiment shown in figure 4, the spindle 60 is also provided at its top with a bevel gear wheel 61, but this bevel gear wheel is engaged only with one gear wheel mounted on a transverse shaft 64. This transverse shaft 64 is provided at both ends with a square coupling piece 25. On each of the coupling pieces 25 a coupling shaft 63, not shown in the drawing, provided with a corresponding opening can be arranged to connect the leg concerned with other legs.

This embodiment is distinguished from the embodiment shown in figure 2 in that both connecting shafts 23 have the same direction of rotation, while in the embodiment shown in figure 2 the two coupling shafts 23 have opposite directions of rotation.

## Claims

1. Table leg (7) for a table (1) provided with a table top (2) adjustable in height, comprising two mutually telescopically slidable leg parts (15, 16), an upper leg part (15) which is provided with means for fastening to the table top, a lower leg part (16) which is provided with a spindle nut (13) in which is screwed a screw spindle (60) mounted on the upper leg part (15), and an electric motor (19) incorporated in the table leg (7) for driving the screw spindle (60), whereby said electric motor (19) is connected to the lower free end of said screw spindle (60), characterized in that said electric motor (19) is suspended freely on said screw spindle (60) in said lower leg part (16), and that said electric motor (19) and said lower leg part (16) are provided with co-operating restraining means (17, 28) which prevent said electric motor (19), movable up and down in the lower leg part (16), from rotating with respect to said lower leg part (16).

2. Table leg as claimed in claim 1, characterized in that the restraining means comprise at least one longitudinal groove (17) arranged in the inner leg part (16) and an electric motor (19) support guided in this longitudinal groove (17).

3. Table leg as claimed in claim 1 or 2, characterized in by first and second switching means (45, 46) that switch off the electric motor when the table leg (7) reaches respectively its lower or highest position.

4. Table leg as claimed in claim 3, characterized in that the first and second switching means (45, 46) are mounted on the upper surface and lower surface respectively of the spindle nut (13).

5. Table leg as claimed in claim 1–4, characterized in that a power-supply apparatus (21) for the electric motor (19) is accommodated in the bottom of the table leg (7).

6. Table leg as claimed in claims 1–5, characterized in that the screw spindle (60) in the upper leg part (15) is coupled with coupling means (61, 62, 23) for coupling to a non-driven screw spindle of another table leg (6, 8) of adjustable height.

7. Table of adjustable height provided with at least one table leg as claimed in claims 1–6.

8. Table as claimed in claim 7, characterized in that the height adjustable, electrically driven table leg (7) is coupled via coupling means (61, 62, 23) to at least one non-driven screw spindle (60) of a height adjustable table leg (6, 8).

## Revendications

1. Pied de table (7) pour une table (1) pourvue d'un plateau (2) réglable en hauteur, comprenant deux parties formant pied pouvant coulisser de manière télescopique l'une par rapport à l'autre (15, 16), une partie de pied supérieure (15) qui est pourvue de moyens permettant la fixation au plateau, une partie de pied inférieure (16) qui est pourvue d'un écrou à tige (13) dans lequel est vissée une tige de vis (60) montée sur la partie de pied supérieure (15), et un moteur électrique (19) intégré au pied de table (7) pour entraîner la tige de vis (60), ledit moteur électrique (19) étant ainsi relié à l'extrémité libre inférieure de ladite tige de vis (60), caractérisé en ce que ledit moteur électrique (19) est suspendu librement sur ladite tige de vis (60) dans ladite partie de pied inférieure (16), et en ce que ledit moteur électrique (19) et ladite partie de pied inférieure (16) sont pourvus de moyens de blocage coopérants (17, 28) qui empêchent ledit moteur électrique (19), pouvant se déplacer vers le haut et vers le bas dans la partie de pied inférieure (16), de tourner par rapport à ladite partie de pied inférieure (16).

2. Pied de table selon la revendication 1, caractérisé en ce que les moyens de blocage comprennent au moins un évidement longitudinal (17) ménagé dans la partie de pied intérieure (16) et un support de moteur électrique (19) guidé dans cet évidement longitudinal (17).

3. Pied de table selon les revendications 1 ou 2, caractérisé par des premier et deuxième moyens interrupteurs (45, 46) qui arrêtent le moteur électrique lorsque le pied de table (7) atteint respectivement sa position la plus haute ou sa position la plus basse.

4. Pied de table selon la revendication 3, caractérisé en ce que le premier et le deuxième moyens interrupteurs (45, 46) sont montés sur la surface supérieure et sur la surface inférieure respectivement de l'écrou à tige (13).

5. Pied de table selon les revendications 1 à 4, caractérisé en ce qu'un appareil permettant l'alimentation en courant (21) pour le moteur électrique (19) est logé dans le fond du pied de table (7).

6. Pied de table selon les revendications 1 à 5, caractérisé en ce que la tige de vis (60) dans la partie du pied supérieure (15) est couplée avec des moyens de couplage (61, 62, 23) pour le couplage à une tige de vis non entraînée d'un autre pied de table (6, 8) réglable en hauteur.

7. Table réglable en hauteur pourvue d'au moins un pied de table selon les revendications 1 à 6.

8. Table selon la revendication 7, caractérisée en ce que le pied de table entraîné électriquement réglable en hauteur (7) est couplé par des moyens de couplage (61, 62, 23) à au moins une tige de vis non entraînée (60) d'un pied de table réglable en hauteur (6, 8).

## Patentansprüche

1. Tischbein (7) für einen ein höhenverstellbares Tischoberteil (2) aufweisenden Tisch (1), mit zwei gegeneinander teleskopartig verschiebbaren Beinteilen (15, 16), einem oberen, eine Einrichtung zur Befestigung am Tischoberteil aufweisenden Beinteil (15), einem unteren, eine Spindelmutter (13) aufweisenden Beinteil (16), wobei eine am oberen Beinteil (15) angebrachte Schraubspindel (60) in die Spindelmutter (13) eingreift, und einem in dem Tischbein (7) eingebauten und mit dem freien unteren Ende der Schraubspindel (60) verbundenen Elektromotor (19) zum Antreiben der Schraubspindel (60), dadurch gekennzeichnet, daß der Elektromotor (19) in dem unteren Beinteil (16) frei an der Schraubspindel (60) aufgehängt ist und daß der Elektromotor (19) und das untere Beinteil (16) mit einer Zwangsführung (17, 28) versehen sind, die ein Verdrehen des in dem unteren Beinteil (16) auf- und abwärts bewegbaren Elektromotors (19) gegenüber dem unteren Beinteil (16) verhindert.

2. Tischbein nach Anspruch 1, dadurch gekennzeichnet, daß die Zwangsführung wenigstens eine im inneren Beinteil (16) angeordnete Längsnut (17) und eine in dieser Längsnut (17) geführte Halterung des Elektromotors (19) umfaßt.

3. Tischbein nach Anspruch 1 oder 2, gekennzeichnet durch eine erste (45) und eine zweite (46) Schaltvorrichtung zum Abschalten des Elektromotors (19), wenn das Tischbein (7) seine niedrigste bzw. höchste Lage erreicht.

4. Tischbein nach Anspruch 3, dadurch gekennzeichnet, daß die erste (45) und die zweite (46) Schaltvorrichtung an der oberen bzw. unteren Fläche der Spindelmutter (13) angebracht sind.

5. Tischbein nach einem der Ansprüche 1 bis 4, dadurch gekennzeichnet, daß eine Stromversorgungseinrichtung (21) für den Elektromotor (19) im Fuß des Tischbeins (7) untergebracht ist.

6. Tischbein nach einem der Ansprüche 1 bis 5, dadurch gekennzeichnet, daß die Schraubspindel (60) im oberen Beinteil (15) mit einer Koppeleinrichtung (61, 62, 23) zum Ankoppeln an eine antriebslose Schraubspindel eines weiteren höhenverstellbaren Tischbeins (6, 8) verbunden ist.

7. Höhenverstellbarer Tisch mit zumindest einem Tischbein nach einem der Ansprüche 1 bis 6.

8. Tisch nach Anspruch 7, dadurch gekennzeichnet, daß das höhenverstellbare, elektrisch angetriebene Tischbein (7) über eine Koppeleinrichtung (61, 62, 23) an wenigstens eine antriebslose Schraubspindel (60) eines höhenverstellbaren Tischbeins (6, 8) angekoppelt ist.

FIG. 1

FIG.2

FIG.4

FIG.3